# NEUE EUROPÄISCHE PATENTSCHRIFT

(11) **EP 0 590 270 B2**
(45) Veröffentlichungstag und Bekanntmachung des Hinweises auf die Entscheidung über den Einspruch: **10.11.2010**
(45) Hinweis auf die Patenterteilung: 06.05.1998
(21) Anmeldenummer: 93112315.2
(22) Anmeldetag: 31.07.1993
(51) Int. Cl.: C08G 77/26, C08G 77/388

(54) **Organosilanpolykondensate**
Organosilane polycondensates
Polycondensats d'organosilane

(30) Priorität: 01.10.1992 DE 4233021
(43) Veröffentlichungstag der Anmeldung: 06.04.1994
(73) Patentinhaber: Evonik Degussa GmbH, 45128 Essen (DE)
(72) Erfinder: Standke, Burkhard, Dr., D-79618 Rheinfelden (DE); Rauleder, Hartwig, Dr., D-79618 Rheinfelden (DE); Seiler, Claus-Dietrich, Dr., D-79618 Rheinfelden (DE); Kötzsch, Hans-Joachim, Dr., D-79618 Rheinfelden (DE); Peeters, Hermann, Dr., D-53721 Siegburg (DE)

(56) Entgegenhaltungen:
- EP-A- 0 353 766
- EP-A- 0 487 211
- DE-A- 2 648 240
- DE-B- 1 811 814
- US-A- 5 115 049

## Beschreibung

Gegenstand der Erfindung ist die Herstellung von Organosilanpolykondensaten.

Es ist bekannt, Hydrochloride funktionalisierter Aminosilane, z. B. von 3-(N-vinylbenzyl-2-aminoethyl)aminopropyltrimethoxysilan oder 3-(N-benzyl-2-aminoethyl)aminopropyltrimethoxysilan, als Haftvermittler zu verwenden. Über Haftvermittlung bei der Beschichtung von Metallen, vorzugsweise Kupfer und Eisen, mit Polyolefinen oder Epoxidharzen wird in den Schriften US 4 902 556, EP 0 353 766 und US 4 849 294 berichtet. Haftvermittlung auf Glasoberflächen wird gemäß den Schriften EP 0 338 128, WO 88/00527, US 4 499 152, US 4 382 991, US 4 330 444, DE 28 02 242 (Haftvermittler für diverse Harzsysteme auf Glasfasern) und BE 845 040 (Haftvermittler für Epoxidharz auf Flachglas für verbesserte Alkaliresistenz) erreicht. Als Haftvermittler für oxidische Füllstoffe in diversen organischen Polymeren besteht ebenfalls Verwendung (JP 01/259 369, EP 0 176 062). Aus ökologischen [z. B. Verminderung des CSB-Werts (Wert für den chemischen Sauerstoffbedarf im Abwasser)] und arbeitssicherheitstechnischen Gründen ist ein Einsatz in wässrigen Systemen vorteilhaft. Die beschriebenen Substanzen sind jedoch nur schwer in Wasser löslich. Ohne Einsatz stabilisierender Zusätze oder erheblicher Mengen organischer Säuren ist eine wässrige Formulierung nicht möglich und dann auch nur in geringen Konzentrationen von unter 1 % (JP 62/243 624, US 4 499 152, US 4 382 991, US 4 330 444, DE 28 02 242).

Aufgabe der Erfindung ist es, Verfahren zur Herstellung von funktionalisierten Siliconverbindungen der beschriebenen Art in Form von alkoholischen oder wässrigen Lösungen zu schaffen.

Diese Aufgabe wird gelöst durch das Verfahren gemäß Anspruche 1.

So konnte dieses Problem durch gezielte hydrolytische Polymerisation des Aminosilans H₂N(CH₂)ₘNH(CH₂)ₙSi(OR)_{3-z}R'_{z} und anschließende Funktionalisierung durch Reaktion mit einem entsprechenden funktionellen Alkylsalz unter Bildung eines wasserlöslichen Organosilanpolykondensats nach Anspruch 1 gelöst werden. Die Bedeutung der Symbole in der vorgenannten allgemeinen Formel ist in Anspruch 1 erläutert. Die erfindungsgemäßen Organosilanpolykondensate werden auch als Polysiloxane oder oligomere bzw. polymere Siloxane bezeichnet.

Die Produkte weisen gegenüber den reinen funktionalisierten Aminosilanen der allgemeinen Formel (III)

Z-Si(OR)_{3-z}R'_{z} (III),

in der bedeuten:
R, R' Alkylrest mit einer Kohlenstoffzahl von 1 bis 8,
z ≤ 1,
Z organischer Rest der Formel (II)

   -(CH₂)ₙNH_{c}-R¹_{d}(CH₂)ₘNHₑR²_{f} • HX_{(f+d)} (II),

   in der n, m, p, q ganze Zahlen von 1 bis 8 sind,
   c ≤ 1, d ≤ 1, e < 2, f ≤ 2, c+d = 1, e+f = 2, ausgenommen f = 0,
   X ein anorganischer oder organischer Säurerest ist,
   R¹ ist -(CH₂)ₚAr¹, R ist -(CH₂)_{q}Ar² und Ar¹ und Ar² sind Aryl-, Aralkyl- oder Aralkenylreste,
den Vorteil der Wasserlöslichkeit auf, sodass die Produkte in wässrigen Beschichtungssystemen ohne stabilisierende Zusätze und auch in hohen Konzentrationen eingesetzt werden können.

Am Beispiel der Verbindung

[CH₂=CH-C₆H₄-CH₂-NH-(CH₂)₂NH(CH₂)₃-SiO_{[1,5-(a+b)/2]}(OH)ₐ(OCH₃)_{b}]ᵣ

(0 < a < 3, 0 < b < 3, a+b < ₃, r > ₁) wird die Vorgehensweise erläutert:
Herstellung durch hydrolytische Polymerisation eines Aminosilans mit nachfolgender Funktionalisierung durch Reaktion mit einem funktionellen Alkylhalogenid:
   H₂N(CH₂)₂NH(CH₂)₃-Si(OCH₃)₃ wird mit einer Wassermenge hydrolytisch polymerisiert, welche dem 0,25- bis 4-fachen (bevorzugt 1,5-fachen) molaren Siliciumgehalt des eingesetzten Aminosilans entspricht. Es entsteht eine viskose Flüssigkeit. Zur besseren Handhabung wird mit Methanol verdünnt. Die Lösung wird dabei dünnflüssig. Im Anschluss wird mit einer Stoffmenge Vinylbenzylchlorid (CH₂=CH-C₆H₄-CH₂-Cl), gegebenenfalls verdünnt mit Methanol, welche der molaren Menge des eingesetzten Aminosilans entspricht, umgesetzt. Es resultiert ein Gemisch aus oligomeren und polymeren Siloxanen.

Einstellung des pH-Werts der mit Wasser verdünnten Lösung auf Werte von weniger als 4,5 durch Zugabe von Säure ergibt ein Gemisch aus oligomeren und polymeren Siloxanen.

Der verwendete molare Wassermenge entspricht dem 0,25-fachen bis 4-fachen molaren Siliciumgehalt des eingesetzten Aminosilans. Bei geringeren Wassermengen wird keine vollständige Wassermischbarkeit erreicht. Bei größerer Wassermenge kommt es bei der Synthese der Hydrolysate zu Ausfällungen. Die erfindungsgemäß hergestellten Polyorganosiloxane sind in reiner Form meist hochviskos oder fest. Zur besseren Handhabung erfolgt die Herstellung in einem Alkohol, besonders bevorzugt in demjenigen Alkohol, der bei der Hydrolyse freigesetzt wird. Bevorzugt werden ein- oder mehrwertige, verzweigte, unverzweigte oder cyclische Alkohole mit 1 bis 18 Kohlenstoffatomen als Lösungsmittel verwendet.

Die Herstellung der Produkte kann in einfachen Rührgefäßen mit Dosiervorrichtung erfolgen. Vorteilhaft wird das zur Hydrolyse benötigte Wasser in die Silanlösung oder das reine Silan eindosiert. Die Zugabegeschwindigkeit des Wassers ist unkritisch, sofern die angegebenen Konzentrationsbereiche eingehalten werden und die bei der Hydrolyse entstehende Wärme abgeführt wird. Reaktionstemperaturen über 100 °C sind zu vermeiden, sofern das Produkt Alkenylgruppen enthält (Polymerisationsgefahr). Wird bei der Herstellung der Produkte zunächst das Aminosilan durch Zugabe von Wasser hydrolytisch polymerisiert, so erfolgt die Umsetzung zum funktionalisierten Aminopolysiloxan durch Zudosieren des entsprechenden funktionellen Alkylsalzes, bevorzugt des funktionellen Alkylchlorids, in das zuvor hergestellte Aminopolysiloxan. Um hochviskose Produkte zu vermeiden, und zum Abfangen lokaler Temperaturspitzen (exotherme Reaktion) wird das funktionelle Alkylchlorid mit einem Alkohol verdünnt. Vorteilhafterweise verwendet man als Lösungsmittel denjenigen Alkohol, der bei der hydrolytischen Polymerisierung frei wird. Gegebenenfalls können beide Reaktionsschritte in einer Anlage stattfinden. Konzentration der funktionellen Aminopolysiloxane und Viskosität der Lösung können durch destillative Entfernung des eingesetzten Lösungsmittels oder durch Verdünnen mit Lösungsmittel eingestellt werden.

Die erfindungsgemäßen Lösungen der funktionellen Aminopolysiloxane sind in jedem Verhältnis mit Wasser mischbar, ohne dass eine sofortige Trübung oder Ausfällung erfolgt. Langzeitstabilität verdünnter wässriger Lösungen kann gegebenenfalls durch Einstellung des pH-Werts der Lösung auf Werde < 4,5 durch Zugabe ausreichender Menge Säure, bevorzugt Essigsäure, erreicht werden.

Die Erfindung wird nachfolgend anhand der Beispiele erläutert.

### Beispiel 1

### Herstellung eines funktionalisierten Aminopolysiloxans aus hydrolytisch polymerisiertem NH₂-(CH₂)₂NH(CH₂)₃Si(OCH₃)₃ und Umsetzung mit CH₂=CH-C₆H₄-CH₂-Cl

In einem beheizbaren 1-I-Dreihalskolben, ausgerüstet mit Stickstoffüberlagerung, Rückflusskühler und Tropftrichter, werden 222 g Aminoethylaminopropyltrimethoxysilan vorgelegt. Unter Rühren werden anschließend 27 g Wasser (entsprechend 1,5 mol pro mol eingesetztes Silicium) langsam eindosiert. Das Reaktionsgemisch erwärmt sich dabei auf ca. 60 °C. Die Temperatur wird durch Heizen 1 Stunde gehalten. Danach werden 105 g Methanol zugefügt. Im Anschluss werden 152,5 g Vinylbenzylchlorid, gemischt mit 104,5 g Methanol, unter Rühren langsam eindosiert. Die Temperatur wird durch Kühlen (während des Eindosierens) und nachfolgendes Heizen ca. 3 Stunden auf 64 °C gehalten. Nach Abkühlung wird mit 138 g Methanol auf einen Siliciumgehalt von 3,74 Gew.-% verdünnt.

### Beispiel 2

### Herstellung eines funktionalisierten Aminopolysiloxans aus hydrolytisch polymerisiertem NH₂-(CH₂)₂NH(CH₂)₃Si(OCH₃)₃ und Umsetzung mit C₆H₅-CH₂-Cl

In einem beheizbaren 1-I-Dreihalskolben, ausgerüstet mit Stickstoffüberlagerung, Rückflusskühler und Tropftrichter, werden 222 g Aminoethylaminopropyltrimethoxysilan vorgelegt. Unter Rühren werden anschließend 27 g Wasser (entsprechend 1,5 mol pro mol eingesetztes Silicium) langsam eindosiert. Das Reaktionsgemisch erwärmt sich dabei auf ca. 60 °C. Die Temperatur wird durch Heizen 1 Stunde gehalten. Danach werden 92 g Methanol zugefügt. Im Anschluss werden 126,5 g Benzylchlorid, gemischt mit 91,5 g Methanol, unter Rühren langsam eindosiert. Die Temperatur wird durch Kühlen (während des Eindosierens) und nachfolgendes Heizen ca. 3 Stunden auf 64 °C gehalten. Nach Abkühlung wird mit 138 g Methanol auf einen Siliciumgehalt von 4,01 Gew.-% verdünnt.

### Beispiel 3

### Herstellung einer wässrigen Lösung des Produkts aus Beispiel 1

In einem Rührgefäß werden 92 g Wasser vorgelegt und unter Rühren mit 8 g des Produkts aus Beispiel 1 versetzt. Es resultiert eine klare Lösung mit einem Siliciumgehalt von 0,32 Gew.-%. Durch Ansäuern mit Essigsäure auf einen pH-Wert von 4 kann eine mit der Zeit einsetzende Trübung vermieden werden.

### Beispiel 4

### Herstellung einer wässrigen Lösung des Produkts aus Beispiel 2

In einem Rührgefäß werden 92 g Wasser vorgelegt und unter Rühren mit 8 g des Produkts aus Beispiel 2 versetzt. Es resultiert eine klare Lösung mit einem Siliciumgehalt von 0,30 Gew.-%. Durch Ansäuern mit Essigsäure auf einen pH-Wert von 4 kann eine mit der Zeit einsetzende Trübung vermieden werden.

### Beispiel 5 (Vergleichsbeispiel)

### Löseversuch von [CH₂=CH-C₆H₄-CH₂-NH-(CH₂)₂NH(CH₂)₃Si(OCH₃)₃]HCl (VI) in Wasser:

In einem Rührgefäß werden 92 g Wasser vorgelegt und unter Rühren mit 8 g einer 50 gew.-%igen Lösung von VI in Methanol (Si-Gehalt: 3,74 Gew.-%) versetzt. Es treten sofort Ausfällungen auf. Eine homogene Lösung ist nicht erzielbar. Der theoretische Siliciumgehalt der Gesamtlösung beträgt 0,30 Gew.-%.

### Beispiel 6 (Vergleichsbeispiel)

### Löseversuch von [C₆H₅-CH₂-NH-(CH₂)₂NH(CH₂)₃Si(OCH₃)₃]HCl (VII) in Wasser:

In einem Rührgefäß werden 92 g Wasser vorgelegt und unter Rühren mit 8 g einer 50 Gew.-%-igen Lösung von VII in Methanol (Si-Gehalt: 4,01 Gew.-%) versetzt. Es resultiert eine inhomogene, trübe Lösung. Der theoretische Siliciumgehalt der Gesamtlösung beträgt 0,32 Gew.-%.

## Patentansprüche

1. Verfahren zur Herstellung von alkoholischen Lösungen von Organosilanpolykondensaten der Formel (I)
[Z-SiO_{[1.5-(a+b+z)/2]}(OH)ₐ(OR)_{b}R'_{z}]ᵣ (I),
in welcher bedeuten
0 < a < 3, 0 < b < 3, (a+b+z) < 3, z ≤ 1, r > 1,
R, R' Alkylrest mit einer Kohlenstoffzahl von 1 bis 8,
Z organischer Rest der Formel (II)
-(CH₂)ₙNH_{c}-R¹_{d}(CH₂)ₘNHₑR²_{f} ·HX_{(f+d)} (II),
in der n, m, p, q ganze Zahlen von 1 bis 8 sind,
c ≤ 1, d ≤ 1, e < 2, f ≤ 2, c+d = 1, e+f = 2, ausgenommen f = 0,
X ein anorganischer oder organischer Säurerest ist,
R¹ ist -(CH₂)ₚAr¹, R² ist -(CH₂)_{q}Ar² und Ar¹ und Ar² sind Aryl-, Aralkyl- oder Aralkenylreste,
durch hydrolytische Polymerisation eines Aminosilans und anschließende Funktionalisierung durch Reaktion mit einem funktionellen Alkylsalz, wobei Verbindungen der allgemeinen Formel
H₂N(CH₂)ₘNH(CH₂)ₙSi(OR)_{3-z}R'_{z},
in der R, R', m, n und z die zuvor angegebene Bedeutung haben,
mit einer molaren Wassermenge, welche dem 0,25- bis 4-fachen molaren Siliciumgehalt der eingesetzten, in Alkohol gelösten Aminoverbindung entspricht, unter Abführung der bei der Hydrolyse entstehenden Wärme hydrolytisch polymerisiert werden, die Viskosität durch Zugabe von Alkohol als Lösungsmittel eingestellt wird und nachfolgende Reaktion des Kondensats mit Verbindungen der allgemeinen Formeln
XR¹ oder XR²,
in denen X, R¹ und R² die zuvor angegebene Bedeutung haben,
erfolgt.

2. Verfahren nach Anspruch 1,
**dadurch gekennzeichnet,**
**dass** man H₂N(CH₂)₂NH(CH₂)₃Si(OCH₃)₃ hydrolytisch polymerisiert und im Anschluss mit CH₂=CH-C₆H₄-CH₂Cl oder C₆H₅-CH₂Cl umsetzt.

3. Verfahren nach den Ansprüchen 1 oder 2,
**dadurch gekennzeichnet,**
**dass** man zur Stabilisierung der Organosilanpolykondensate nach Verdünnen mit Wasser durch Zugabe einer ausreichenden Menge Säure den pH-Wert der Lösung auf Werte von weniger als 4,5 einstellt.

4. Verfahren nach einem der Ansprüche 1 oder 2,
**dadurch gekennzeichnet,**
**dass** als Alkohol ein- oder mehrwertige, verzweigte, unverzweigte oder cyclische Alkohole mit einer Kohlenstoffzahl von 1 bis 18 verwendet werden.

## Claims

1. Process for preparing alcoholic solutions of organosilane polycondensates of the formula (I)
[Z-SiO_{[1.5-(a+b+z)/2}](OH)ₐ(OR)_{b}R'_{z}]ᵣ (I),
in which
0 < a < 3, 0 < b < 3, (a+b+z) < 3, z ≤ 1, r > 1,
R, R' are each an alkyl radical having a carbon number of 1 to 8,
Z is organic radical of the formula (II)
-(CH₂)ₙNH_{c}-R¹_{d}(CH₂)ₘNHₑR²_{f} ·HX_{(f+d)} (II),
in which n, m, p and q are integers from 1 to 8, c ≤ 1, d ≤ 1, e < 2, f ≤ 2, c+d = 1, e+f = 2, with the exception of f = 0,
X is an inorganic or organic acid radical,
R¹ is -(CH₂)ₚAr¹, R² is -(CH₂)_{q}Ar², and Ar¹ and Ar² are aryl, aralkyl or aralkenyl radicals,
by hydrolytic polymerization of an aminosilane and subsequent functionalization by reaction with a functional alkyl salt, where compounds of the general formula
H₂N(CH₂)ₘNH(CH₂)ₙSi(OR)_{3-z}R'_{z},
in which R, R', m, n and z are as defined above, are polymerized hydrolytically with a molar amount of water which corresponds to 0.25 to 4 times the molar silicon content of the amino compound used in solution in alcohol, with removal of the heat formed during the hydrolysis, the viscosity being adjusted by addition of alcohol as solvent, and subsequent reaction of the condensate takes place with compounds of the general formulae
XR¹ or XR²,
in which X, R¹ and R² are as defined above.

2. Process according to Claim 1, **characterized in that** H₂N (CH₂)₂NH (CH₂)₃Si (OCH₃)₃ is polymerized hydrolytically and reacted subsequently with CH₂=CH-C₆H₄-CH₂Cl or C₆H₅-CH₂Cl.

3. Process according to Claims 1 or 2, **characterized in that** the organosilane polycondensates are stabilized, following dilution with water, by setting the pH of the solution to values of less than 4.5 by addition of a sufficient amount of acid.

4. Process according to one of Claims 1 or 2, **characterized in that** use is made as alcohol of monohydric or polyhydric, branched, unbranched or cyclic alcohols having a carbon number of 1 to 18.

## Revendications

1. Procédé pour la préparation de solutions alcooliques de produits de polycondensation d'organosilanes de formule (I)
[Z-SiO_{[1,5-(a+b+z)/2]}(OH)ₐ(OR)_{b}R'_{z}]ᵣ (I)
dans laquelle
0<a<3, 0<b<3, (a+b+z)<3, z≤1, r>1
R, R' signifient un radical alkyle présentant un indice de carbone de 1 à 8,
Z signifie un radical organique de formule (II)
-(CH₂)ₙNH_{c}-R¹_{d}(CH₂)ₘNHₑR²_{f}.HX_{(f+d)} (II)
dans laquelle n, m, p, q sont des nombres entiers de 1 à 8,
c≤1, d≤1, e<2, f≤2, c+d=1, e+f=2, à l'exception de f=0
X représente un radical d'acide organique ou inorganique,
R¹ représente -(CH₂)ₚAr¹, R² représente -(CH₂)_{q}Ar², et Ar¹ et Ar² représentent des radicaux aryle, aralkyle ou aralkylène,
par polymérisation hydrolytique d'un aminosilane et fonctionnalisation consécutive par réaction avec un sel d'alkyle fonctionnel, où des composés de formule générale
H₂N(CH₂)ₘNH(CH₂)ₙSi(OR)_{3-z}R'_{z}
dans laquelle R, R', m, n et z présentent la signification indiquée ci-dessus
sont polymérisés hydrolytiquement avec une quantité molaire d'eau, qui correspond à 0,25 à 4 fois la teneur molaire en silicium du composé amino utilisé, dissous dans l'alcool,
avec évacuation de la chaleur formée lors de l'hydrolyse,
la viscosité est réglée par addition d'alcool comme solvant et
réaction consécutive du produit de réaction est effectivée avec des composés des formules générales
XR¹ ou XR²
dans lesquelles X, R¹ et R² ont la signification indiquée ci-dessus.

2. Procédé selon la revendication 1, **caractérisé en ce qu'**on polymérise hydrolytiquement du H₂N(CH₂)₂NH(CH₂)₃Si(OCH₃)₃ et on transforme ensuite avec du CH₂=CH-C₆H₄-CH₂Cl ou du C₆H₅-CH₂Cl.

3. Procédé selon les revendications 1 ou 2, **caractérisé en ce que**, pour la stabilisation des produits de polycondensation d'organosilanes, on règle, après dilution avec de l'eau, par addition d'une quantité suffisante d'acide, le pH de la solution à une valeur inférieure à 4,5.

4. Procédé selon l'une quelconque des revendications 1 ou 2, **caractérisé en ce qu'**on utilise comme alcool des alcools monovalents ou polyvalents, ramifiés, non ramifiés ou cycliques présentant un indice de carbone de 1 à 18.
